# EUROPÄISCHE PATENTANMELDUNG

(11) **EP 1 911 691 A1**
(43) Veröffentlichungstag der Anmeldung: **16.04.2008**
(21) Anmeldenummer: 07019262.0
(22) Anmeldetag: 01.10.2007
(51) Int. Cl.: B65D 85/34, A23B 7/148, B65D 51/20

(54) **Metalldose für getrocknete Fruchtstücke**

(30) Priorität: 11.10.2006 AT 74006 U
(71) Anmelder: Loacker, Andreas, 39100 Bozen (IT)
(72) Erfinder: Loacker, Andreas, 39100 Bozen (IT)
(74) Vertreter: Torggler, Paul Norbert

(57) **Zusammenfassung**

Metalldose mit einer mindestens einen Innenhohlraum (1) der Metalldose einsdhlleßenden Dosenhülle (2), die einen öffenbaren Dosenverschluss (3) aufweist, und mit in dem mindestens einen Innenhohlraum (1) der Metalldose angeordneten getrockneten Fruchtstückchen (4).

## Beschreibung

Die Erfindung bezieht sich auf eine Metalldose mit einer mindestens einen Innenhohlraum der Metalldose einschließenden Dosenhülle, die einen öffenbaren Dosenverschluss aufweist.

Zur Verpackung von Fruchtstückchen, insbesondere von getrockneten Fruchtchips mit geringer Restfeuchte, sind bereits verschiedenartige Beutel und Säcke bekannt. Der Nachteil dabei besteht darin, dass sich solche Verpackungen nur schwer dicht halten lassen, womit die stark hygroskopischen, getrockneten Fruchtchips Feuchtigkeit aus der Umgebung anziehen und schlaff werden.

Um dieses Problem zu lösen, sieht die Erfindung eine Metalldose mit einer mindestens einen Innenholraum der Metalldose einschließenden Dosenhülle vor, die einen öffenbaren Dosenverschluss aufweist, wobei in dem Innenhohlraum der Metalldose die getrockneten Fruchtstückchen angeordnet ist.

Ähnliche Dosen wurden bisher zur Verpackung von Flüssigkeiten eingesetzt. Zur Verpackung von getrockneten Fruchtstückchen wurden diese bisher aber nicht eingesetzt.

Die Restfeuchtigkeit der in der Metalldose angeordneten Fruchtstückchen vor dem ersten Öffnen beträgt vorteilhafterweise weniger als 8 %, vorzugsweise weniger als 5%. Generell kommen als Fruchtstückchen alle Arten von Obst und von Beeren in getrocknetem Zustand in Frage. Generell ist vorgesehen, dass die Fruchtstückchen in geschnittenem Zustand in die in der Metalldose angeordnet sind. Die Fruchtstückchen können dabei unterschiedliche Formen aufweisen, beispielsweise Fruchtchips, aber auch Fruchtwürfel, etc. Bei kleinem Obst bzw. bei kleinen Beeren (z. B. Heidelbeeren) kann dieses "in Form schneiden" natürlich entfallen.

Der öffenbare Dosenverschluss ist entlang des Umfangsrandes einer Öffnung der Dosenhülle mit der Metalldose zumindest teilweise lösbar verbunden oder zumindest teilweise lösbar verbindbar.

Vorteilhaft kann vorgesehen sein, dass der Dosenverschluss ein vorzugsweise mit einer Lasche versehenes, flexibles Verschlusselement umfasst, das umfangseitig mit einem, mit der Dosenhülle verbundenen, Dosenverschlussring verbunden ist und von diesem zum Öffnen abziehbar ist.

Vorteilhafterweise ist die lösbare Verbindung zwischen Dosenhülle und Dosenverschluss bei verschlossener Metalldose luftdicht ausgebildet.

In einer bevorzugten Ausführungsform ist die lösbare Verbindung zwischen Dosenhülle und Dosenverschluss nach einem Öffnen der Metalldose mit Hilfe eines wieder verwendbaren Klebers wiederholt erneut ausbildbar.

Vorteilhafterweise weist die Metalldose einen Zusatzdeckel aus Kunststoff zum Wiederverschließen der Metalldose auf.

Weitere Vorteile und Einzelheiten der Erfindung werden im Folgenden anhand der beiliegenden Zeichnung erläutert. In dieser zeigen:
- Fig. 1a: eine teilweise weg gebrochene Seitenansicht einer ersten Ausführungsform der Metalldose mit den darin angeordneten getrockneten Fruchtchips;
- Fig. 1b: eine Schrägsicht von oben auf die Metalldose aus Fig. 1a, der Dosenverschluss ungeöffnet;
- Fig. 2a: eine teilweise weg gebrochene Seitenansicht einer zweiten Ausführungsform der Metalldose mit den darin angeordneten getrockneten Fruchtchips;
- Fig. 2b: eine Schrägsicht von oben auf die Metalldose aus Fig. 2a, der Dosenverschluss ungeöffnet;
- Fig. 2c: eine Schrägsicht von oben auf die Metalldose aus Fig. 2b, der Dosenverschluss geöffnet;
- Fig. 3a: eine teilweise weg gebrochene Seitenansicht einer dritten Ausführungsform der Metalldose mit den darin angeordneten getrockneten Fruchtchips;
- Fig. 3b: eine Schrägsicht von oben auf die Metalldose aus Fig. 3a, der Dosenverschluss ungeöffnet;
- Fig. 4a: eine Explosionsansicht einer Ausführungsform der Metalldose mit flexiblem Verschlusselement;
- Fig. 4b: eine Explosionsansicht einer kleineren Ausführungsform der Metalldose aus Fig. 4a;

Wenn in dieser Schrift von getrockneten Fruchtchips die Rede ist, so sind damit zunächst sowohl ebene als auch nicht ebene getrocknete Fruchtscheiben beliebiger Kontur und Dicke gemeint. Beispielsweise könnten diese Fruchtscheiben an ihren Umfangsrändern aufgeworfen und somit uneben ausgebildet sein. Auch können die Fruchtscheiben in ihrem Inneren Löcher und/oder Ausnehmungen und/oder Ausbauchungen aufweisen. Weiters gelten in dem hier konstituierten Zusammenhang auch getrocknete Fruchtspalten, Fruchtflocken etc. als unter den benutzten Begriff "getrocknete Fruchtchips" subsumierbar. Insbesondere eignen sich vakuumgetrocknete Fruchtchips. Neben den Fruchtchips sind auch andere Fruchtstückchen ohne Scheibenform, beispielsweise Fruchtwürfel möglich.

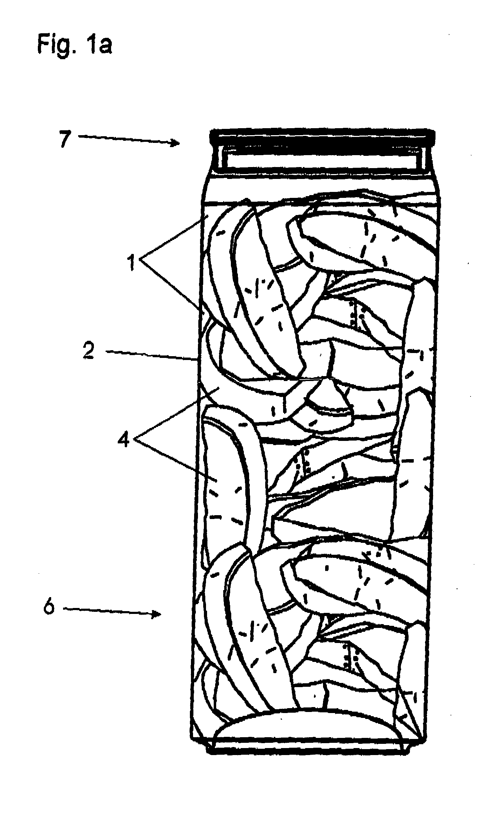

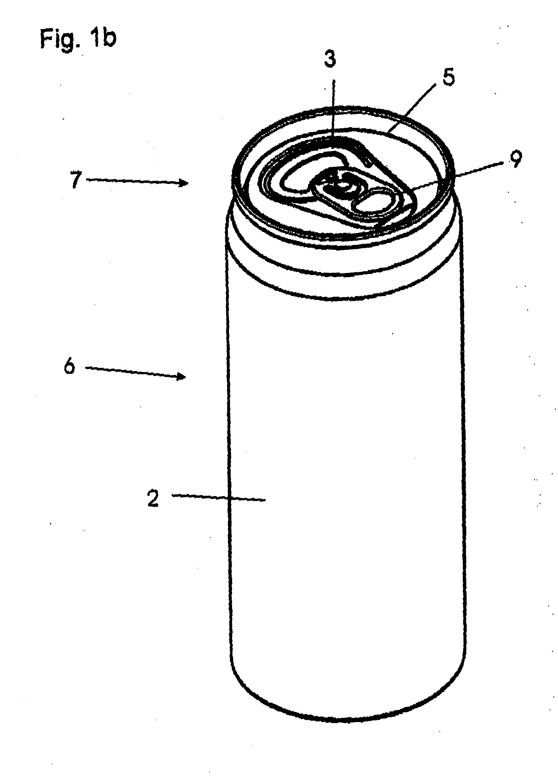

In den Fig. 1a und 1b ist eine erste Ausführungsform einer erfindungsgemäßen Metalldose samt darin gelagerten getrockneten Fruchtchips dargestellt.

Die Metalldose weist eine den Innenhohlraum 1 der Metalldose einschließende Dosenhülle 2 und einen öffenbaren Dosenverschluss 3 auf. Im Innenhohlraum 1 der Metalldose sind die getrockneten Fruchtchips 4 angeordnet.

Die Restfeuchtigkeit der Fruchtchips 4 beträgt vor dem ersten Öffnen der Metalldose weniger al 8 %, vorzugsweise weniger als 5%.

Der öffenbare Dosenverschluss 3 ist entlang des Umfangsrandes 5 einer Öffnung der Dosenhülle 2 mit der Metalldose lösbar verbunden. Er könnte mit dieser auch lediglich teilweise lösbar verbunden sein. Auch ist es denkbar und möglich, dass der Dosenverschluss 3 mit der Metalldose zumindest teilweise lösbar verbindbar ausgebildet ist.

Die lösbare Verbindung zwischen Dosenhülle 2 und Dosenverschluss 3 ist hier bei verschlossener Metalldose luftdicht ausgebildet. Dadurch lässt sich die herstellerseitig verpackte Qualität der in der Metalldose gelagerten getrockneten Fruchtchips 4 besonders lange auf gleich bleibend hohem Niveau konservieren.

Bevorzugterweise ist die lösbare Verbindung zwischen Dosenhülle 2 und Dosenverschluss 3 nach einem Öffnen der Metalldose wiederholt erneut ausbildbar. Vorzugsweise wird eine solche lösbare und wiederholt erneut ausbildbare Verbindung mit Hilfe eines wieder verwendbaren ungiftigen d.h. lebensmittelechten Klebers realisiert. Eine solchermaßen ausgebildete Metalldose erhöht den Nutzen und somit den Wert der Metalldose und der darin verpackten Fruchtchips für den Verbraucher.

Die Metalldose bzw. die Dosenhülle 2 ist hier nahtlos ausgebildet. Diese Ausbildung der Metalldose bzw. der Dosenhülle 2 ist mittels eines Tiefziehverfahrens hergestellt.

Die Metalldose bzw. die Dosenhülle 2 und auch der Dosenverschluss 3 sind hier aus Aluminium gebildet. Sie könnten auch jeweils,aus Stahl oder aus Weißblech gebildet sein. Auch könnten die Dosenhülle 2 und der Dosenverschluss 3 aus unterschiedlichen Paarungen der genannten drei Materialien gebildet sein. Beispielsweise könnte die Dosenhülle 2 aus Weißblech und der Dosenverschluss aus einem Aluminiumblech gebildet sein.

Die Metalldose hat hier eine exakt kreisrunde zylindrische Form und fasst vorzugsweise 330 ml. Sie könnte auch eine andere Form z.B. eine oval-zylindrische, insbesondere elliptisch-zylindrische Form oder auch eine vieleckige, vorzugsweise eine viereckige, Form aufweisen. Auch eine sechseckige Form wäre denkbar und möglich.

Die Dosenhülle 2 weist in der ersten Ausführungsform einen ersten unteren Hüllteil 6 und einen mit diesem verbundenen zweiten oberen Hüllteil 7 auf. Der zweite Hüllteil 7 bildet bei verschlossener Metalldose mit dem Dosenverschluss 3 die lösbare Verbindung aus. Der erste Hüllteil 6 und der mit diesem verbundene zweite Hüllteil 7 sind hier einstückig ausgebildet. Sie könnten auch aus zwei separaten Teilen gebildet sein. Beispielsweise könnten sie entlang einer Naht miteinander verbunden sein.

Vorteilhafterweise weist die Metalldose zusätzlich einen Zusatzdeckel auf, beispielsweise aus Kunststoff (nicht dargestellt). Dieser Zusatzdeckel dient, insbesondere bei Metalldosen mit lediglich einmal verwendbarem Dosenverschluss 3 zum Wiederverschließen der Metalldose, sobald der Dosenverschluss 3 bereits geöffnet worden ist.

Der Dosenverschluss 3 weist hier Lasche 9 mit einem Loch auf. Diese dient als Handgriff zum Öffnen der Metalldose bzw. des Dosenverschlusses 3. Auch der Zusatzdeckel 8 könnte eine Lasche oder einen Handgriff aufweisen, um dem Verbraucher das wieder Verschließen und das wieder Öffnen der Metalldose zu erleichtern.

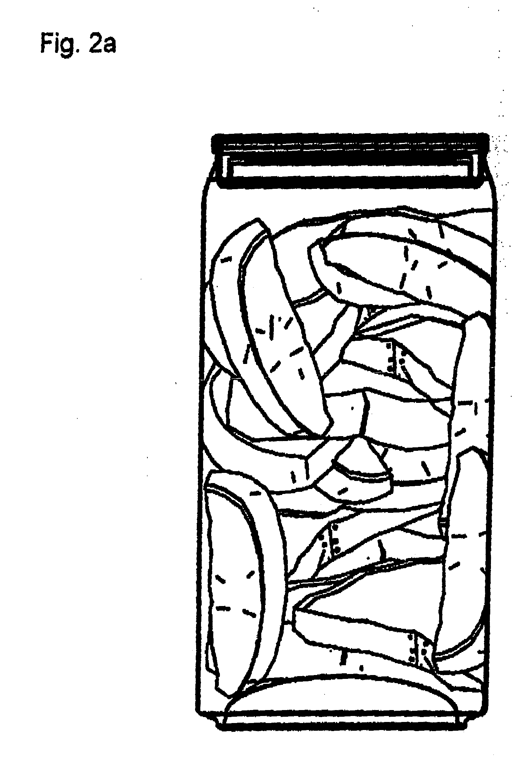

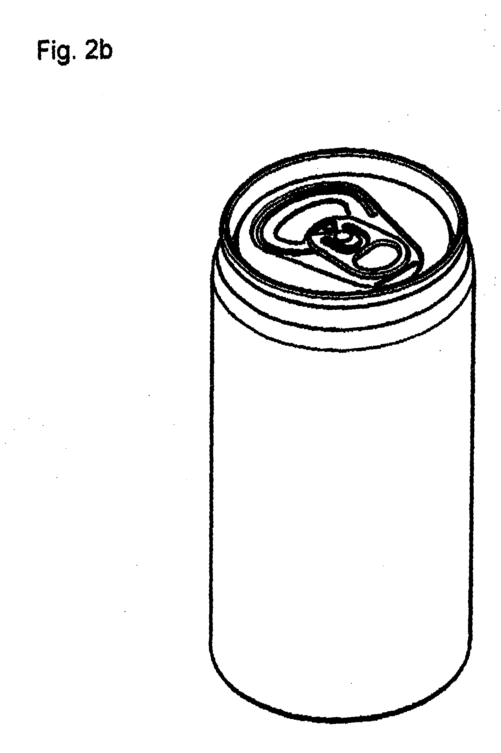

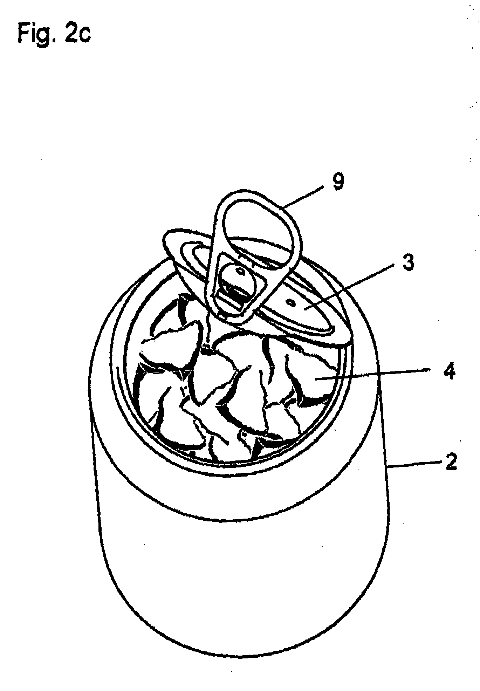

Eine zweite Ausführungsform ist in den Fig. 2a bis 2c dargestellt. Bei dieser Ausführungsform ist die Metalldose im Unterschied zur ersten Ausführungsform weniger hoch ausgebildet (und fasst vorzugsweise 250 ml). Die Fig. 2c zeigt den geöffneten (Vollaufreiß-) Deckel. Die Deckel bei den anderen Varianten lassen sich auf ähnliche Weise öffnen.

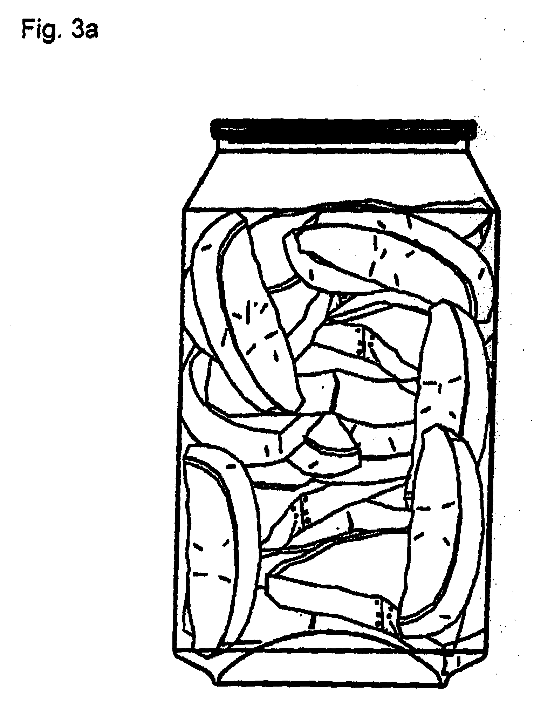

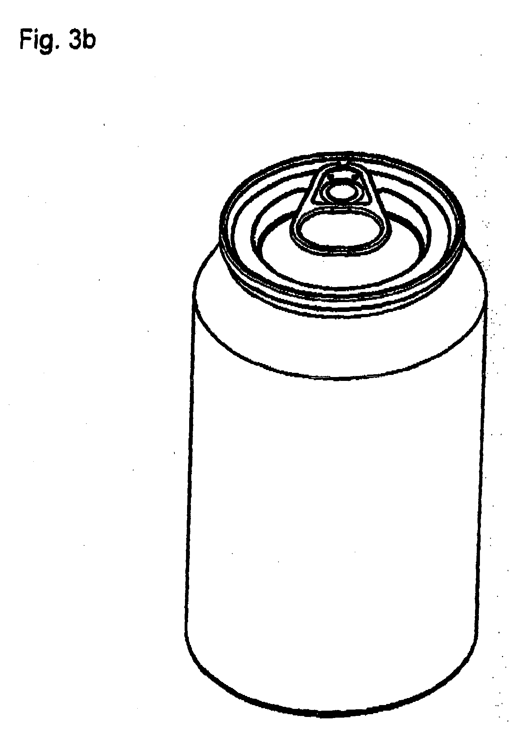

Eine dritte Ausführungsform ist in den Fig. 3a bis 3c dargestellt. Der Unterschied dieser Ausführungsform zur zweiten Ausführungsform besteht darin, dass bei gleicher Öffnung die Dose bauchiger ausgebildet ist (und vorzugsweise 330 ml fasst).

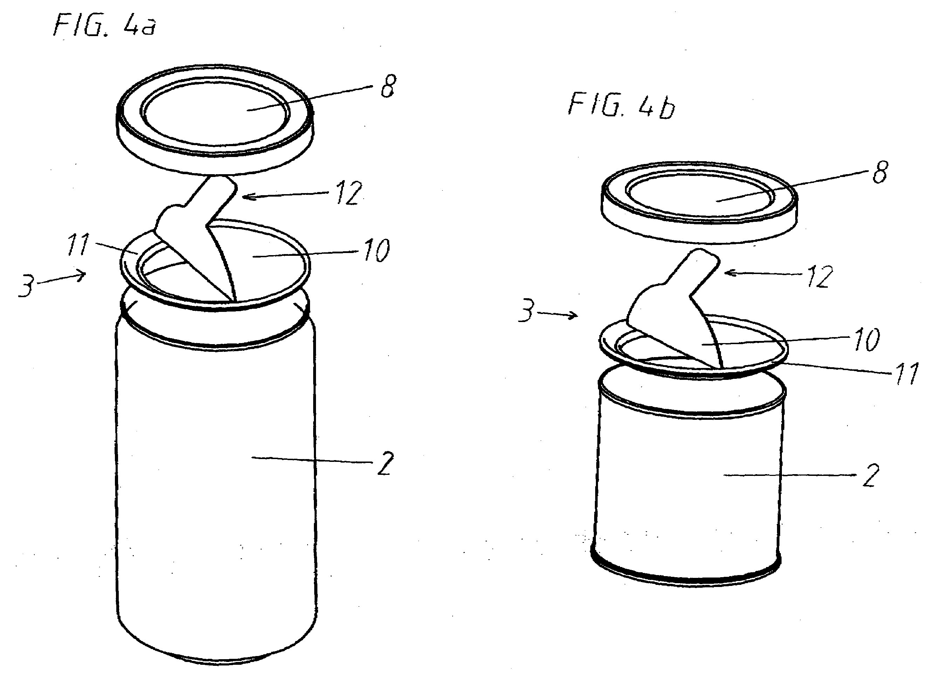

In den Fig. 4a und 4b sind weitere Ausführungsformen der Metalldose ersichtlich, wobei ein so genannter "Peel-off-Deckel" als Dosenverschluss 3 Verwendung findet. In diesen Fällen besteht der Dosenverschluss 3 aus dem Dosenverschfussring 11 und dem Verschlusselement 10, welches eine Lasche 12 zum handlichen Abziehen des Verschlusselementes 10 aufweist. Der Dosenverschlussring 11 ist dabei mit der Dosenhülle 2 fix verbunden. Das Verschlusselement 10 wiederum ist durch ein geeignetes Verschließverfahren, z. B. durch "Hot-Melt", mit dem Dosenverschlussring 11 abziehbar verbunden. Nach Öffnen der Dose kann diese durch den Zusatzdeckel 8 wieder verschlossen werden.

Die Erfindung ist nicht auf die hier angegebenen Ausführungsbeispiele beschränkt. Andere Ausbildungen der Erfindung sind denkbar und möglich. Beispielsweise könnte die Metalldose mehrere Innenhohlräume aufweisen. Eine solche Metalldose würde somit aus mehreren Kompartments bestehen. Diese könnten beispielsweise durch Trennwende voneinander getrennt sein. Die Trennwände könnten beispielsweise voll ausgebildet sein. Es ist jedoch auch denkbar und möglich, dass die Trennwände in Form von Gittern bzw. Sieben ausgebildet sind, die die getrennte oder zumindest vorübergehend getrennte Lagerung der Inhalte ermöglichen. In den Teilinnenhohlräumen könnten unterschiedliche Arten von getrockneten Fruchtchips angeordnet sein. Die Trennwende könnten beispielsweise konzentrisch zur Dosenhülle geformt ausgebildet sein. Vorteilhafterweise könnte man bei einer solchen Ausbildung der Metalldose alle Teilinnenhohlräume mit einem einzigen öffenbaren Dosenverschluss zugänglich machen. Es ist jedoch auch denkbar und möglich für jedes Kompartment einen eigenen Dosenverschluss vorzusehen und so quasi eine Multidose zur Verfügung zu stellen. Es ist auch denkbar und möglich, die einzelnen Kompartments einer solchen "Multidose" separierbar auszubilden. Bei einer solchen Ausbildung könnte sich der Verbraucher Kompartments, deren Inhalt bereits verbraucht worden ist, in einfacher Weise entledigen.

Eine Art "Multidose" ist auch auf einfachere Art und Weise herstellbar, indem beispielsweise zwei Metalldosen Boden an Boden zueinander stehen und von einem gemeinsamen Etikett umfasst werden. So können beide Metalldosen jeweils unterschiedliche getrocknete Fruchtstücksorten enthalten. Durch einfaches Drehen kann dann die jeweils gewünschte Sorte aus der "Multidose" entnommen werden.

## Patentansprüche

1. Metalldose mit einer mindestens einen Innenhohlraum (1) der Metalldose einschließenden Dosenhülle (2), die einen öffenbaren Dosenverschluss (3) aufweist, und mit in dem mindestens einen Innenhohlraum (1) der Metalldose angeordneten getrockneten Fruchtstückchen (4).

2. Metalldose nach Anspruch 1, **dadurch gekennzeichnet, dass** die Restfeuchtigkeit der Fruchtstückchen (4) vor dem ersten Öffnen der Metalldose weniger als 8 %, vorzugsweise weniger als 5 % beträgt.

3. Metalldose nach Anspruch 1 oder 2, **dadurch gekennzeichnet, dass** die getrockneten Fruchtstückchen (4) getrocknetes Obst und/oder getrocknete Beeren sind.

4. Metalldose nach einem der Ansprüche 1 bis 3, **dadurch gekennzeichnet, dass** die getrockneten Fruchtstückchen (4) getrocknete - vorzugsweise vakuumgetrocknete - Fruchtchips sind.

5. Metalldose nach einem der Ansprüche 1 bis 4, **dadurch gekennzeichnet, dass** der öffenbare Dosenverschluss (3) entlang des Umfangsrandes einer Öffnung (5) der Dosenhülle (2) mit der Metalldose zumindest teilweise lösbar verbunden ist oder zumindest teilweise lösbar verbindbar ist.

6. Metalldose nach einem der Ansprüche 1 bis 4, **dadurch gekennzeichnet; dass** der Dosenverschluss (3) ein vorzugsweise mit einer Lasche (12) versehenes, flexibles Verschlusselement (10) umfasst, das umfangseitig mit einem, mit der Dosenhülle (2) verbundenen, Dosenverschlussring (11) verbunden ist und von diesem zum Öffnen abziehbar ist.

7. Metalldose nach einem der Ansprüche 1 bis 6, **dadurch gekennzeichnet, dass** die lösbare Verbindung zwischen Dosenhülle (2) und Dosenverschluss (3) bei verschlossener Metalldose luftdicht ausgebildet ist.

8. Metalldose nach einem der Ansprüche 1 bis 7, **dadurch gekennzeichnet, dass** die lösbare Verbindung zwischen Dosenhülle (2) und Dosenverschluss (3) nach einem Öffnen der Metalldose, vorzugsweise mit Hilfe eines wieder verwendbaren Klebers, wiederholt erneut ausbildbar ist.

9. Metalldose nach einem der Ansprüche 1 bis 8, **dadurch gekennzeichnet, dass** die Metalldose bzw. die Dosenhülle (2) nahtlos ausgebildet ist.

10. Metalldose nach Anspruch 9, **dadurch gekennzeichnet, dass** die Metalldose bzw. die Dosenhülle (2) mittels eines Tiefziehverfahrens hergestellt ist.

11. Metalldose nach einem der Ansprüche 1 bis 10, **dadurch gekennzeichnet, dass** die Metalldose bzw. die Dosenhülle (2) und/oder der Dosenverschluss (3) aus Aluminium und/oder aus Stahl und/oder aus Weißblech gebildet ist.

12. Metalldose nach einem der Ansprüche 1 bis 11, **dadurch gekennzeichnet, dass** die Metalldose im Wesentlichen eine zylindrische Form oder eine vieleckige, vorzugsweise eine viereckige, Form aufweist.

13. Metalldose nach einem der Ansprüche 1 bis 12, **dadurch gekennzeichnet, dass** die Dosenhülle (2) einen ersten Hüllteil (6) und einen mit diesem verbundenen zweiten Hüllteil (7) aufweist, wobei der zweite Hüllteil (7) bei verschlossener Metalldose mit dem Dosenverschluss (3) die lösbare Verbindung ausbildet.

14. Metalldose nach einem der Ansprüche 1 bis 13, **dadurch gekennzeichnet, dass** die Metalldose einen Zusatzdeckel (8), vorzugsweise aus Kunststoff, zum Wiederverschließen der Metalldose aufweist.

15. Metalldose nach einem der vorhergehenden Ansprüche, **dadurch gekennzeichnet, dass** der Dosenverschluss (3) und/oder der Zusatzdeckel (8) einen Handgriff bzw. eine Lasche (9) aufweist.
